# DEMANDE DE BREVET EUROPEEN

(11) **EP 0 793 210 A1**
(43) Date de publication de la demande: **03.09.1997**
(21) Numéro de dépôt: 97400380.8
(22) Date de dépôt: 20.02.1997
(51) Int. Cl.: G09B 7/073, G09B 7/06, G06F 3/023

(54) **Système électronique de contrôle des connaissances à boîtier autonome de saisie et centrale de collecte, et procédé de mise en oeuvre**

(30) Priorité: 21.02.1996 FR 9602115
(71) Demandeur: CODES ROUSSEAU, F-85100 Les Sables d'Olonne (FR)
(72) Inventeur: Moron, Joel, 75018 Paris (FR)
(74) Mandataire: Thibon-Littaye, Annick

(57) **Abrégé**

L'invention concerne un système de contrôle des connaissances comportant des boîtiers autonomes de saisie et de mémorisation de réponses apportées à des questions, et une centrale de collecte (1) des réponses mémorisées pour correction. La centrale de collecte (1) comporte un logement (6) pour la réception temporaire des boîtiers. Il est prévu un dispositif de transmissions bidirectionnelles à couplage capacitif, diposé en partie sous le fond du logement (6) de la centrale de collecte (1) et en partie dans le fond du boîtier. Ce dispositif permet la transmission des réponses mémorisées à la centrale collecte (1), seulement lorsque le boîtier est disposé dans le logement (6). Le dispositif à couplage capacitif permet également des transmissions de données de la centrale de collecte (1)vers le boîtier.

## Description

La présente invention concerne un système électronique de contrôle des connaissances d'au moins un individu, à partir d'un questionnaire, comportant au moins un boîtier autonome de saisie et de mémorisation de chaque réponse apportée par ledit individu à chacune des questions, et une centrale de collecte des réponses préalablement mémorisées dans ledit boîtier, ledit boîtier comportant des touches de saisie, une mémoire d'enregistrement des réponses et un dispositif de visualisation, ledit boîtier et ladite centrale de collecte comportant des moyens d'échange d'informations entre eux lorsque ledit boîtier est disposé dans un logement aménagé dans ladite centrale de collecte, de manière à transmettre les réponses dudit individu à ladite centrale de collecte en vue d'une correction.

Elle concerne également un procédé de mise en oeuvre de ce système.

Un tel système est destiné à faire passer un examen de contrôle des connaissances, à un groupe d'individus ou de candidats, où l'énoncé des questions est réalisé sur un support d'information collectif. Un système selon l'art cionnu est décrit dans la demande de brevet français FR-A 2 688 327 (CODES ROUSSEAU).

Un tel système est utilisé avantageusement pour un examen ou un contrôle à partir d'un questionnaire à choix multiples, tel que les examens ou contrôles du code de la route où les questions sont posées au moyen d'une image reproduisant ou simulant une situation routière.

La demande de brevet précitée décrit en particulier une centrale de collecte connue constituant une unité informatique comportant un microprocesseur qui commande une imprimante destinée à imprimer les résultats, un clavier et deux écrans destinés respectivement au candidat et à l'examinateur. Un sabot, destiné à recevoir chacun des boîtiers autonomes de saisie, est équipé d'un dispositif de transmission de données, qui procède notamment par voie infrarouge.

Un tel système doit présenter une sécurité tout d'abord pour éviter les fraudes, mais aussi pour assurer que les réponses des candidats ont été bien enregistrées par l'examinateur avant que le boîtier ne soit utilisé pour un autre examen. Ceci évite en particulier que l'on puisse introduire les références d'un candidat dans un boîtier contenant les réponses d'un autre candidat.

Il faut également que le boîtier soit particulièrement solide puisqu'il est utilisé par un grand nombre de personnes qui risquent de le maltraiter ; il faut aussi se protéger contre des actes de vandalisme.

A l'origine de la présente invention, il est apparu qu'il est souhaitable de réduire l'encombrement et le prix de revient du dispositif de transmission de données décrit dans la demande de brevet déjà citée qui utilise un émetteur et un récepteur de rayonnement infrarouge. Par ailleurs, la fiabilité est discutable, car la transmission de données peut être affectée par des souillures ou des rayures des fenêtres d'émission ou de réception disposées sur le boîtier et la centrale de collecte. Ces souillures ou rayures sont particulièrement à craindre pour le boîtier qui est pris en mains par le candidat. L'intégrité des données transmises peut s'en trouver affectée.

Par ailleurs, la centrale de collecte est un matériel complexe et coûteux dont le maniement est spécifique et diffère de celui d'un micro-ordinateur classique de type PC ("Personal Computer") auquel est habitué un nombre de plus en plus élevé de personnes. Il est donc souhaitable que l'examinateur puisse utiliser un ordinateur usuel, portable ou non, avec le fonctionnement duquel il est familiarisé pour réaliser le système de contrôle des connaissances.

Dans le cas d'un contrôle lors de l'apprentissage des connaissances, par exemple lors des cours d'une auto-école, il est souhaitable que la correction des réponses puisse être réalisée directement sur le boîtier autonome de saisie sans utiliser la centrale de collecte.

La présente invention se propose de remédier aux inconvénients du système connu de contrôle des connaissances, tels qu'ils ressortent de l'exposé ci-dessus.

Elle a pour objet un système du type précité qui est notamment remarquable en ce que le boîtier comprend des moyens de verrouillage du clavier et de la mémoire d'enregistrement des réponses, commandés par l'enregistrement de la dernière réponse dans ladite mémoire, et des moyens de déverrouillage du clavier commandés par l'acquittement de la transmission des réponses à la centrale et de déverrouillage de la mémoire commandés par la frappe d'un code déterminé sur ledit clavier. Ce code peut notamment être dicté par l'examinateur au début de l'examen et introduit par les candidats dans leur boîtier autonome de saisie, si bien que tous les boîtiers sont activés simultanément.

Ceci permet d'assurer la sécurité contre les fraudes.

Selon une autre caractéristique de l'invention, lesdits moyens d'échange d'informations sont constitués par un dispositif de transmission de données bidirectionnel à couplage capacitif.

Un tel dispositif à couplage capacitif est facile à réaliser. Il suffit graver des plages conductrices sur des plaques de circuit imprimé situées dans les boîtiers et dans la centrale de collecte, sans modification de l'encombrement de ces organes et à faible prix de revient.

En effet, en mettant en vis à vis deux plages conductrices, à une certaine distance l'une de l'autre, on réalise un condensateur, à condition que le milieu de séparation soit en matériau diélectrique.

Par ailleurs, il n'est pas nécessaire de prévoir des fenêtres de transmission, comme c'est le cas dans l'art connu représenté par la demande de brevet français précitée : il suffit de placer les plages conductrices à faible distance l'une de l'autre, la transmission s'effectue à travers l'enveloppe du boîtier et de la centrale de collecte. Les lames d'air résiduelles et le matériau des parois (a *priori* de la matière plastique) constituent le milieu diélectrique rappelé ci-dessus. On sait qu'un condensateur disposé en circuit série transmet des signaux alternatifs ou impulsionnels, ce d'autant mieux que la capacité de ce condensateur est élevée (impédance faible) et la fréquence des signaux élevée.

Il est à remarquer que les souillures ou rayures ne peuvent affecter dans ce cas la qualité de la transmission.

Selon une autre caractéristique de l'invention, la centrale de collecte comporte un port de transmission de données pouvant être connecté à un micro-ordinateur de telle manière que ladite centrale travaille dans le mode esclave sous la commande dudit micro-ordinateur.

Une telle conception permet à l'examinateur de commander toutes les opérations nécessaires pour l'examen à partir d'un micro-ordinateur usuel dont il connaît bien le fonctionnement, par exemple un micro-ordinateur portable. Par ailleurs, la centrale de collecte est de structure simple et peu coûteuse, dans la mesure où elle ne comporte qu'un seul périphérique, à savoir l'imprimante.

Selon un mode de réalisation de l'invention, destiné préférentiellement au contrôle des connaissances lors de leur apprentissage, la centrale de collecte comporte un dispositif de visualisation et des touches de commande. Avantageusement, elle comporte aussi un dispositif de lecture de carte à puce.

Par suite de ces caractéristiques, l'invention permet d'utiliser directement la centrale de collecte pour commander des opérations de contrôle des connaissances au cours de leur enseignement. En particulier, on peut introduire dans chaque boîtier des données provenant de corrigés, de manière à permettre aux élèves d'effectuer eux-mêmes un test de leurs connaissances pour préparer l'examen.

Selon une autre caractéristique de l'invention, on effectue un contrôle du bon fonctionnement du boîtier avant le début de chaque examen. A cet effet, le circuit électronique du boîtier comprend un système de contrôle de l'état de charge des piles d'alimentation électrique qui est activé lors du contrôle du bon fonctionnement du boîtier, un message visuel d'alarme étant affiché sur le dispositif de visualisation du micro-ordinateur ou sur le dispositif de visualisation de la centrale de collecte lorsque la charge des piles descend au-dessous d'un seuil prédéterminé.

Ceci permet d'assurer la disponibilité de fonctionnement du boîtier pendant l'examen.

Du fait des dispositions retenues, on assure pleinement la sécurité globale du fonctionnement du système, sécurité qui se définit habituellement par le concept dit "DIC", pour "Disponibilité", "Intégrité" des données échangées et "confidentialité" (ce qui interdit les fraudes).

D'autres caractéristiques et avantages de l'invention ressortiront de la description qui suit, faite à titre non limitatif en se référant aux dessins ci-annexés, sur lesquels :
- la figure 1 est une vue de dessus d'une centrale de collecte destinée à l'examen du code de la route,
- la figure 2 est une vue de dessus d'un boîtier autonome de saisie utilisé avec la centrale de collecte de la figure 1,
- la figure 3 est une vue de profil correspondant à la figure 1, le boîtier étant placé sur la centrale de collecte,
- la figure 4 montre une vue en perpective d'une centrale de collecte destinée au contrôle des connaissances dans une auto-école,
- la figure 5 est un schéma synoptique de la centrale de collecte selon l'invention,
- la figure 6 représente le schéma synoptique du boîtier,
- la figure 7 illustre le principe de la transmission par couplage capacitif,
- la figure 8 est une coupe transversale du boîtier,
- et la figure 9 est un organigramme illustrant le fonctionnement du système selon l'invention.

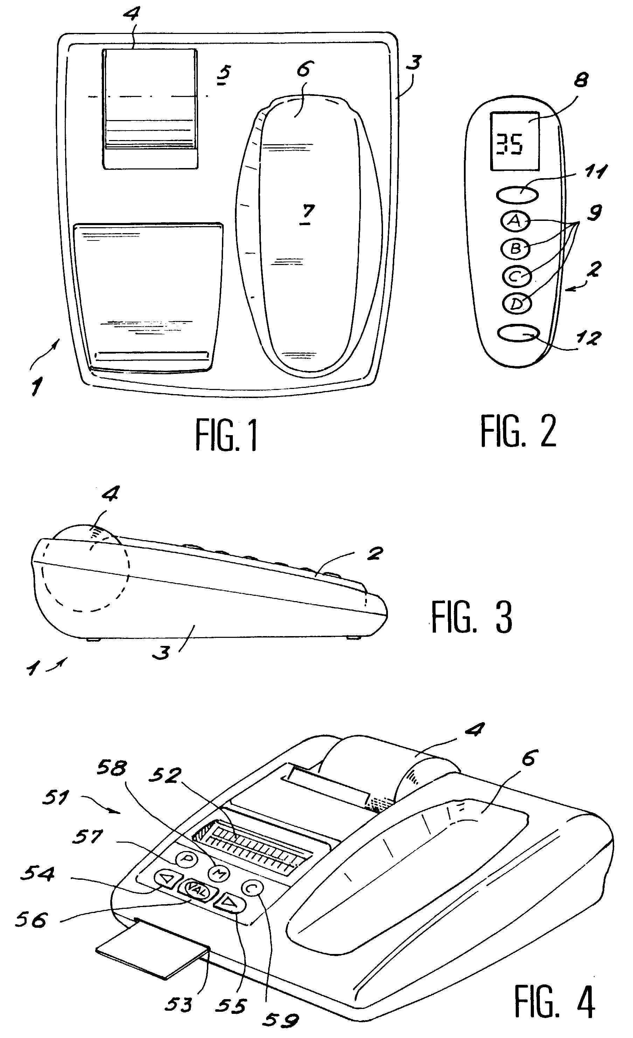

La figure 1 représente une centrale de collecte 1 destinée au passage de l'examen du code de la route du permis de conduire en association avec des boîtiers autonomes de saisie 2 tels que celui qui est représenté sur la figure 2. La figure 3 représente, en vue de profil, l'ensemble de la centrale de collecte et du boîtier en position de transmission de données sur la centrale de collecte.

La centrale de collecte 1 est constituée d'une coque 3, par exemple en matière synthétique, dans laquelle est disposé un dispositif électronique qui sert en particulier à commander une imprimante 4. Ce dispositif électronique comporte un port de transmission de données, par exemple un port série disposé sur sa face arrière (non visible sur la figure).

Par ailleurs, la centrale de collecte 1 présente, sur sa face supérieure 5, une empreinte 6 (voir également sur la figure 3), dont la forme correspond à celle du boîtier 2 et qui est destinée à recevoir ce dernier en vue d'une transmission de données entre la centrale de collecte 1 et le boîtier 2.

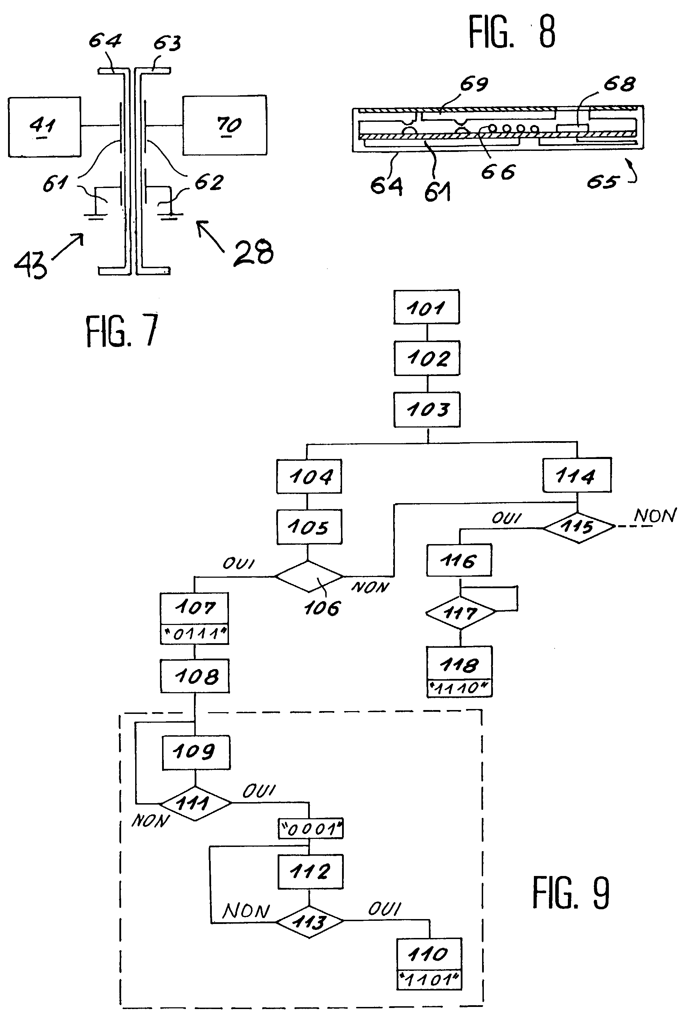

Cette transmission de données est réalisée par couplage capacitif entre des plaques de condensateur, réalisées respectivement sur le circuit imprimé du circuit électronique de la centrale de collecte 1 et sur celui du boîtier 2. Avantageusement, cette transmission s'effectue entre la face inférieure du boîtier 2 et le fond 7 de l'empreinte 6 à travers les parois de la coque 3 et du boîtier 2, qui sont avantageusement constituées, dans cette zone, à base de polyester ou de tout autre matériau diélectrique. Le couplage capacitif est donc réalisé au moyen de paires de plaques comportant chacun une plage conductrice dans le boîtier 2 mise en regard avec une plage conductrice dans la centrale 1 lors de l'insertion du boîtier 2 dans l'empreinte 6. Chaque paire de plaques forme un condensateur. Un exemple de réalisation sera détaillé ci-après en regard de la figure 7.

Le boîtier 2 est constitué par une coque de forme oblongue qui contient un circuit électronique qui est relié à un écran de visualisation 8 et des touches de commande, 9, 11 et 12, disposées sur sa face supérieure. La forme ergonomique de ce boîtier 2 permet une prise en mains facile par les candidats.

Les touches de commande comportent des touches 9 de réponse, permettant de choisir entre plusieurs réponses possibles (quatre touches référencées A, B, C et D dans l'exemple représenté), une touche de correction 11 et une touche de validation 12.

Le circuit électronique du boîtier comprend un système (non visible sur la figure) de contrôle de l'état de charge des piles d'alimentation qui vérifie l'état des piles. Il est activé pendant le processus d'initialisation du boîtier et fournit un signal de "pile faible" lorsque l'état des piles, déterminé par le système de contrôle, descend au-dessous d'une valeur de seuil pour laquelle, par exemple, l'autonomie du boîtier est encore au minimum de 20 h. Un tel système de contrôle peut être réalisé à base de circuits électroniques bien connus de l'Homme de Métier et ne nécessite pas d'être décrit plus avant.

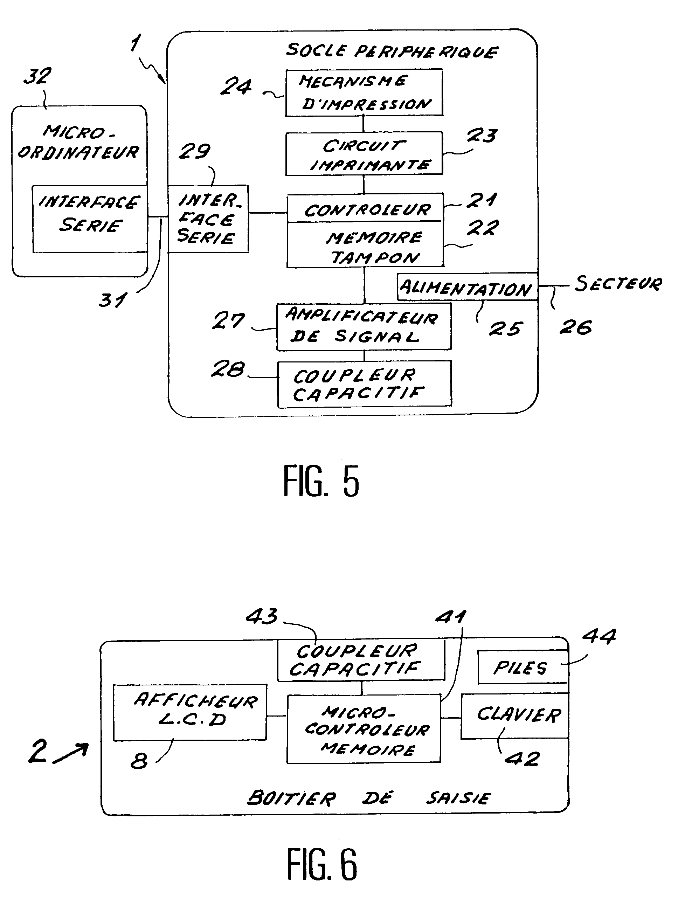

La figure 5 montre le schéma synoptique de la centrale de collecte 1. Celle-ci comporte un processeur 21 (microprocesseur ou microcontrôleur), une mémoire tampon 22, un circuit de pilotage d'imprimante 23, un dispositif d'impression 24 et une alimentation 25 à partir du secteur 26. Le dispositif de transmission de données avec le boîtier 2 comporte des circuits 27 d'amplification de signal et un coupleur capacitif 28. Ce dernier comprend notamment des plages conductrices gravées sur une plaque de circuit imprimé supportant les circuits électroniques qui viennent d'être énumérés. La plaque de circuit imprimé est disposée sur le fond de l'empreinte 6 du boîtier 2.

Le processeur 21 est également relié à une interface ou port série 29, comprenant un connecteur sur lequel on peut brancher un câble de liaison 31 relié à un port série d'un micro-ordinateur portable 32.

La figure 6 montre le schéma synoptique du circuit électronique du boîtier 2. On y voit un ensemble 41, constitué d'un microprocesseur ou d'un microcontrôleur, et d'une mémoire, sous la référence unique 41, qui est reliée à l'ensemble 42 des touches de saisie, 9, 11 et 12 (figure 2), à l'écran de visualisation 8 et à un circuit d'interface spécifique comprenant un coupleur capacitif 43, complémentaire du coupleur 28 de la centrale de collecte 1. Ce circuit électronique est alimenté à partir de piles électriques 44 qui lui fournissent une autonomie minimale de fonctionnement, typiquement de deux ans.

La mémoire du microcontrôleur 41 comprend une mémoire morte dans laquelle est enregistré un programme commandant le fonctionnement du boîtier 2 et une mémoire vive divisée, dans l'exemple décrit, en trois zones d'adresses, une zone pour des éléments d'identification du candidat, une zone pour des éléments caractérisant la session et une zone pour des réponses qui, dans le cas où il y a quatre possibilités de réponse (A, B, C et D), sont codées sur un quarté (ensemble de quatre bits).

La figure 4 représente une variante de réalisation de la centrale de collecte de la figure 1 qui est destinée à l'utilisation par les moniteurs des auto-écoles.

Cette centrale de collecte 51 est semblable à la centrale de collecte 1, mais elle comporte, en plus, un écran de visualisation 52, des touches de commande et un lecteur de carte à puce 53 disposé sur sa face avant. Les touches de commande comprennent deux touches de déplacement 54 et 55, une touche de validation 56, une touche 57 de "Préférences", une touche 58 de "Mode" et une touche 59 de "Connexion".

Le circuit électronique de cette centrale de collecte 51 est semblable à celui de la centrale de collecte 1, mais le contrôleur 21 est, en plus, relié à un écran 52, à des touches de commande 54 à 58 et à un lecteur de carte à puce 53.

La figure 7 illustre schématiquement un exemple de réalisation de dispositif de transmission par couplage capacitif. L'interface physique de communication comprend deux paires de plages conductrices, 61 et 62, en cuivre, gravées directement sur les supports des circuits imprimés respectifs du boîtier 2 et de la centrale de collecte 1. Ces plages, 61 et 62, forment les plaques ou électrodes de deux condensateurs. Le matériau diélectrique est constitué par des lames d'air résiduelles les séparant, et, surtout, par les deux parois, en matière plastique, du boîtier 2 (inséré dans l'empreinte 6) et de la centrale de collecte 1, respectivement les parois 64 et 63.

Comme il est bien connu, l'impédance d'un condensateur (si on néglige les effets parasites) est donnée par la formule *Z*_{*c*} = 1/*jωC* ; avec *j* imaginaire, *C* la valeur de la capacité et ω = *2πf*, où *f* est la fréquence. La capacité *C* d'un condensateur plan est proportionnelle à la surface des plages conductrices en vis à vis, à la constante diélectrique, et inversement proportionnelle à la distance séparant les plages conductrices, c'est-à-dire les électrodes.

On peut donc transmettre au travers d'une capacité, disposée en série dans un circuit électrique, des signaux alternatifs ou impulsionnels. L'admittance du circuit électrique est d'autant plus faible que la fréquence est élevée, pour une valeur de capacité donnée. En d'autres termes, dans la structure de l'invention, on peut transmettre des signaux du type précités au travers des parois 63 et 64, ce uniquement lorsque le boîtier 2 est inséré dans l'empreinte 6 de la centrale de collecte 1.

La face des circuits imprimés portant les plages conductrices, 61 et 62, formant les électrodes des condensateurs sont positionnées à quelques dixièmes de millimètres des coques 64 et 63, du boîtier 2 et de la centrale de collecte 1, respectivement. Le débit de communication d'une transmission à couplage capacitif est relativement faible, mais le volume de données à transmettre étant seulement de quelques octets, la durée de communication entre la centrale et les boîtiers est toujours inférieure à deux secondes.

Selon une première caractéristique du dispositif de couplage capacitif selon l'invention, les masses des circuits électroniques disposés dans le boîtier 2 et la centrale de collecte 1, respectivement, n'étant pas connectée (masses "flottantes") puisqu'il n'y a pas de constacts galvaniques entre les deux circuits, il est nécessaire, d'une part, d'utiliser deux condensateurs, comme illustré par la figure 7, et, d'autre part de "reformer" les signaux transmis.

Dans le cadre de l'invention, la transmission s'effectue directement à l'aide d'impulsions fournies, soit par le microcontrôleur 41 (figure 6 ; transmission du boîtier 2 à la centrale de collecte 1), soit par le contrôleur 21 (figure 5 ; transmission de la centrale de collecte 1 au boîtier 2). Pour ce faire, on met en oeuvre des circuits classiques conformateurs de signaux (non représentés), habituellement à base de composants passifs (résistances) et/ou de circuits logiques (portes, bascules, comparateurs, etc.).

Selon une deuxième caractéristique du dispositif de couplage capacitif selon l'invention, en vue de limiter au maximum la consommation en énergie électrique des boîtiers 2, on met en oeuvre des circuits d'amplification bidirectionnels, 70, situés dans la centrale de collecte 1. Ces circuits d'amplification comprennent au moins deux amplificateurs, un premier amplificateur recevant sur une entrée les signaux transmis par le boîtier 2 (c'est-à-dire provenant du microcontrôleur 41), et un deuxième amplificateur recevant les signaux générés par le contrôleur 21 sur une entrée et les retransmettant amplifiés au boîtier 2, via les condensateurs du dispositif de couplage. Il n'est donc pas nécessaire de disposer des composants électroniques de puissance dans les boîtiers 2.

La figure 8 est une coupe transversale du boîtier 2. On peut voir la coque 65 qui est constituée de deux demi-coques en matière synthétique rigide et peu déformable; ces deux demi-coques sont emboîtées et maintenues par des vis qui sont recouvertes par des pieds en caoutchouc. On obtient ainsi un boîtier qui peut résister aux manipulations brutales et qui ne peut être ouvert par les candidats. On assure ainsi une grande durée de vie du boîtier.

Dans la coque 65 est disposé le circuit imprimé 66 qui porte la plaque de couplage capacitif 61. Le dispositif d'affichage comporte un afficheur à cristaux liquides 68 fixé sur la plaque de circuit imprimé 66 qui est disposée au fond (paroi 64) de la coque 65 de telle manière que l'afficheur 68 se trouve à une certaine distance de la face supérieure 69 de la coque en regard d'une fenêtre 71 en matière transparente. De cette manière, l'afficheur à cristaux liquides 68, qui est fragile, est inaccessible de l'extérieur du boîtier, et il est protégé contre les chocs ou les appuis sur la zone d'affichage de la face supérieure 69. L'afficheur 68 présente un fort contraste et a des caractères suffisamment grands pour être lisibles dans la semi-pénombre. Selon un mode de réalisation, le contraste est égal à 20 et les caractères ont une dimension minimale de 6 x 6 mm.

Le fonctionnement du système selon l'invention sera décrit ci-après en se référant à l'organigramme de la figure 9 sur la quelle les opérations réalisées sur le boîtier par le candidat sont entourées par un trait interrompu, les autres opérations étant réalisées par l'examinateur sur le micro-ordinateur.

Lors d'un examen du code de la route, l'ensemble du système constitué par la centrale de collecte 1 et le boîtier 2 disposé dans l'empreinte 6 de cette dernière est entièrement commandé par l'examinateur au moyen du micro-ordinateur 32 relié à la centrale de collecte 1 par la liaison série 31, la centrale de collecte fonctionnant en mode esclave. Le micro-ordinateur 32 envoie à la centrale de collecte 1 des chaînes de caractères de données ou d'instructions comportant notamment une adresse indiquant l'élément de destination. Le contrôleur 21 interprète cette adresse, la supprime de la chaîne de caractères et achemine ensuite cette chaîne vers l'adresse indiquée. Aucun transfert ne s'effectue directement entre les boîtiers de saisie 2 et l'imprimante 4 de la centrale de collecte 1.

Dans une première étape 101, l'examinateur branche la centrale de collecte 1 (figure 5) sur le micro-ordinateur 32. On effectue tout d'abord un test (facultatif) de la centrale de collecte 1 (étape 102) en vérifiant toute la chaîne de caractères mise en jeu dans la manipulation. Si le test est bon, on introduit un boîtier dans l'empreinte 6 de la centrale de collecte 1 (étape 103).

On effectue tout d'abord un test du boîtier (étape 104), puis on lance le processus d'initialisation (étape 105). Au cours du test (étape 104), on active en particulier le système de contrôle de l'état de charge des piles 44 d'alimentation électrique du boîtier 2 et lorsque l'état des piles n'est pas suffisant pour assurer une autonomie d'au moins 20 h, un message de "pile faible" est émis. L'examinateur peut alors quand même réaliser sa journée d'examen avec ce boîtier, un examen théorique durant environ 1,5 h, mais il doit ensuite changer les piles à la fin de la journée.

Les boîtiers de saisie comportent quatre indicateurs binaires ou drapeaux ("flag"), à savoir F1 qui concerne le clavier du boîtier et qui est à "0" s'il est déverrouillé et "1" s'il est verrouillé, F2 qui concerne la mémoire servant à l'inscription des réponses et qui est à "0" si elle est déverrouillée et "1" si elle est verrouillée, F3 qui est à "1" si les réponses ont été transmises au micro-ordinateur et à "0" si elles ne le sont pas encore et F4 qui est à "1" si un nouveau candidat a été identifié et à "0" dans le cas contraire. Ces quatre indicateurs déterminent un quarté d'état *ET* = F1F2F3F4.

Il doit être clair que les termes "verrouillage" et "déverrouillage" s'entendent d'un point de vue logique, même en ce qui concerne les touches, 9, 11 et 12, du clavier. En effet un verrouillage "physique" (par exemple électromagnétique) impliquerait une dépense d'énergie incompatible avec l'application visée. Le "verrouillage" interdit la prise en compte effective d'une saisie d'information (appui sur une touche) et son enregistrement dans la mémoire.

Dans une étape 106, le micro-ordinateur 32 vérifie que le quarté d'état *ET* se trouve bien égal à "1110", c'est-à-dire que le clavier et la mémoire sont tous deux verrouillés et que les réponses inscrites dans la mémoire ont bien été transmises au micro-ordinateur 32, mais qu'aucun nouveau candidat n'a été enregistré. Si le boîtier 2 a été lu au moins une fois, les réponses sont effacées et la mémoire est remise à zéro. Si la réponse au test 106 est négative (branche "NON"), on passe à la phase de correction (étape 115) décrite ci-après.

Si la réponse est positive (branche "OUI"), dans une étape 107, on prépare le boîtier pour un examen en introduisant dans le boîtier, par l'intermédiaire du coupleur capacitif, un identifiant du candidat, par exemple les trois premières lettres de son nom et les trois derniers chiffres de son numéro de dossier, la référence du boîtier 2, par exemple un nombre, le nombre de questions d'essai (par exemple 0 à 6), le nombre de questions de l'examen (par exemple 1 à 60), une séquence de déverrouillage composée de huit frappes de touche parmi les touches 9 (A, B, C, D) et 11 (Correction) et se terminant obligatoirement par une neuvième frappe sur la touche 12 (Validation). A la fin de cette étape, le clavier est déverrouillé, la mémoire reste verrouillée et le quarté d'état *ET* prend la valeur "0111".

Le boîtier 2 est alors prêt pour l'examen du candidat. Il est sorti de la centrale de collecte (étape 108) et peut être remis au candidat ; la centrale de collecte lreçoit alors un nouveau boîtier. L'écran 8 du boîtier affiche l'identifiant du candidat, qui peut vérifier qu'il s'agit bien de son boîtier. Le boîtier 2 est en mode d'initiation, c'est-à-dire que les touches, 9, 11 et 12, sont actives, mais leur manipulation n'est pas enregistrée par le boîtier 2. Le candidat peut alors s'exercer au maniement du boîtier.

Le déverrouillage de la mémoire du boîtier 2, c'est-à-dire son activation pour l'enregistrement des réponses, est obtenu par une séquence spécifique, par exemple de neuf frappes de touches dictées par l'examinateur (étape 109). Cette séquence est comparée (étape 111) avec le code de déverrouillage introduit lors de la phase d'initialisation (étape 107) ; en cas d'erreur de code (branche "NON"), le candidat recommence l'étape 109. Si le code est bon (branche "OUI"), la mémoire d'inscription des réponses (partie mémoire vive) est déverrouillée et le quarté d'état *ET* prend la valeur "0001". Après le déverrouillage, l'identifiant du candidat disparaît et le symbole "Examen" s'allume puis l'écran 8 affiche le numéro 1 correspondant à la première question. Pendant l'examen (étape 112), le boîtier enregistre les réponses fournies par le candidat dans la partie mémoire vive de l'ensemble 41. Le candidat répond en appuyant sur la touche 9 correspondant à son choix, l'écran 8 affiche le choix fait (A, B, C ou D) et le candidat valide ce choix par la touche 12 ou actionne la touche 11 pour modifier sa réponse.

La frappe de la touche de validation 12 entraîne l'enregistrement de la réponse dans la mémoire, incrémente le numéro de la réponse et efface le ou les symbole(s) A, B, C ou D de la réponse.

A chaque réponse, un test est effectué (étape 113). La fin de l'examen est détectée lorsque la dernière réponse a été enregistrée. Si c'est le cas (branche "OUI"), le clavier et la mémoire sont tous deux verrouillés, le quarté d'état *ET* prend la valeur "1101" et l'écran affiche de nouveau l'identifiant du candidat (étape 110). Le boîtier est en attente de correction et les touches sont inactives.

La phase de correction est effectuée par l'examinateur sur le micro-ordinateur 32. On place tout d'abord un boîtier de saisie dans la centrale de collecte 1 (étape 114) puis on vérifie que le quarté d'état *ET* a la valeur "1101" (étape 115). Si cela est vérifié, le micro-ordinateur 32 commande la transmission des réponses du boîtier 2 par l'intermédiaire de la centrale de collecte 1 pour les corriger et commande l'imprimante 24 de la centrale qui délivre une étiquette autocollante indiquant les références du candidat et son résultat (bon ou mauvais avec le nombre de réponses exactes) (étape 116). Dans le cas où un candidat a été évincé, ceci est enregistré dans la centrale de collecte 1 par le micro-ordinateur et l'imprimante édite un message correspondant.

Lorsque les réponses ont bien été transmises au micro-ordinateur 32, celui-ci envoie un message d'acquittement ou accusé de réception au boîtier 2, via la centrale de collecte 1, ce qui est vérifié par l'étape de test 117. Le quarté d'état *ET* prend alors la valeur "1110" (étape 118). Le boîtier est prêt pour un nouvel examen.

Pendant toutes les communications entre les boîtiers 2 et le micro-ordinateur 32, après chaque transmission d'une chaîne de données, l'élément récepteur extrait de la chaîne reçue des caractères de contrôle et les utilise, de façon classique, pour vérifier l'intégrité des données reçues. Il envoie un accusé de réception à l'élément émetteur en indiquant le résultat du contrôle d'intégrité. Si celui-ci est négatif, l'émetteur renvoie la même chaîne de données jusqu'à l'obtention d'un accusé de réception positif. Le nombre de tentatives est limité pour détecter les problèmes de fonctionnement sans rester bloqué.

En cas de mauvais fonctionnement du boîtier pendant l'examen ou si, au cours de l'examen, un candidat est expulsé, le boîtier correspondant 2 est annulé comme lorsque l'on constate un mauvais fonctionnement lors du processus d'initialisation. Lors de cette opération d'annulation, le micro-ordinateur commande l'impression d'un ticket "Annulé". Le boîtier est ensuite mis en état d'attente (éteint) et ne peut en aucune façon être corrigé.

Pour réduire la consommation en énergie électrique, le boîtier 2 se met automatiquement en état de sommeil (veille), par exemple après une heure d'inactivité et l'écran est éteint. Le boîtier est réveillé par deux appuis successifs sur les touches 11 (Correction) et 12 (Validation) ; il retrouve alors l'état qui précédait la mise en sommeil, quel que soit cet état (initiation, examen, attente de correction). Ce n'est que lorsqu'il a été corrigé et non encore initialisé que le boîtier est totalement inactif.

La figure 4 représente une centrale de collecte 51 qui peut être utilisé sans ordinateur extérieur pour les cours des auto-écoles et peut donc fonctionner de manière autonome. Dans ce cas, le boîtier 2 est initialisé par la centrale de collecte 51 qui lui transmet des informations fournies par des cartes à puce placées successivement dans un lecteur 53 (corrigé des questions, identifiant de l'élève, séquence de déverrouillage) après un test de bon fonctionnement.

L'initiation et l'enregistrement des réponses s'effectuent de la même manière que pour un examen. A la fin de l'enregistrement des réponses, le boîtier passe en mode résultat et affiche le nombre de bonnes réponses. Après validation du résultat, le boîtier est en mode "Contrôle" et permet à l'élève de revoir ses réponses. Ensuite le boîtier est soit lu et ré-initialisé sur une centrale, soit ré-initialisé à la main par un appui simultané prolongé sur les touches 11 (Correction) et 12 (Validation).

Dans ce cas, la centrale de collecte 51 est munie de touches, 55 à 59, et d'un écran 52 pour pouvoir fonctionner de manière autonome. De plus, le lecteur 53 de carte à puce permet d'introduire des données telles que l'identifiant du candidat et la grille des réponses.

On voit que l'invention permet de réaliser de manière fiable le contrôle des connaissances pour un examen ou pour un enseignement. La forme du boîtier permet un maniement facile pour les candidats. Les différents éléments du système selon l'invention sont robustes et fiables.

En particulier, le dispositif selon l'invention présente une grande sécurité contre le mauvais état des piles, la fraude et le vandalisme.

Le bon fonctionnement du boîtier est assuré à la fois par le système de contrôle de la décharge des piles et par la vérification de l'état des piles qui est fait à chaque initialisation du boîtier.

La sécurité et la fiabilité des résultats est très bonne puisque, en particulier, la mémoire d'enregistrement des réponses du boîtier de saisie 2 est verrouillée dès que la dernière réponse a été enregistrée et qu'elle n'est déverrouillée que lorsque les réponses ont été transmises au micro-ordinateur 32 et effacées. De ce fait, si l'examinateur oublie de lire les réponses, le boîtier 2 est inutilisable, ce qui assure que l'on ne peut pas perdre les réponses d'un candidat tant qu'elles n'ont pas été sauvegardées sur un support d'information, par exemple une disquette. Par ailleurs les réponses sont effacées lors de l'inscription d'un nouveau candidat. Enfin, dès que l'examen est fini, il n'est plus possible d'écrire ou de modifier des réponses avec le clavier du boîtier puisque celui-ci est verrouillé.

Le protocole d'échanges de données avec contrôle de l'intégrité des données transmises élimine les possibilités d'erreur en particulier lors du contrôle des réponses.

La centrale de collecte 1 est de structure simple et elle est facilement commandée au moyen d'un micro-ordinateur 32 (portable ou non), de type usuel.

Le système selon l'invention est avantageusement fourni dans une mallette (non représentée) renfermant la centrale de collecte 1 et les boîtiers 2.

L'utilisation d'une transmission par couplage capacitif permet d'obtenir une grande fiabilité car elle ne peut se faire qu'à très faible distance si bien qu'elle n'est pas perturbée par le milieu ambiant, en particulier par des parasites lumineux comme c'est le cas pour les communications par voie optique.

Cette transmission est robuste car elle ne nécessite pas de contact galvanique, ce qui élimine les problèmes d'usure ; elle est totalement isolée et invisible de l'extérieur ; elle n'est donc pas sujette au vandalisme.

Outre la fiabilité, elle assure la prise en compte du paramètre "confidentialité", notamment lors de la transmission du boîtier 2 vers la centrale de collecte 1, et, de ce fait, les données ne peuvent être modifiées. Il ne peut y avoir d'ambiguïté quant à la source d'émission de ces données, le boîtier 2 devant se trouver dans le socle 6 et toutes interférences, qu'elles soient d'origine accidentelle ou frauduleuse, étant pratiquement exclues. Ce ne serait pas obligatoirement le cas, par exemple, si une transmission électromagnétique était utilisée.

Tous les paramètres assurant la sécurité du système sont donc pris en compte.

Enfin, elle ne nécessite que très peu de composants et permet d'obtenir une liaison bidirectionnelle pratiquement sans consommation du boîtier, les composants actifs pour l'essentiel, et notamment les composants de puissance (amplificateurs) étant disposés dans la centrale de collecte 1.

La vitesse de transmission est suffisante pour assurer un temps de transmission court.

Grâce en particulier à l'utilisation d'un système de transmission passif à couplage capacitif, la consommation du boîtier pendant son fonctionnement est très faible si bien que, en utilisant seulement une pile au lithium du type CR 2032 de 3 V, 180 mAh de faible poids, on assure une autonomie minimale de deux ans sur la base de 200 jours par an de 8 sessions d'examen durant une heure.

## Revendications

**1.** Système électronique de contrôle des connaissances d'au moins un individu, à partir d'un questionnaire, comportant au moins un boîtier autonome (2) de saisie et de mémorisation de chaque réponse apportée par ledit individu à chacune des questions et une centrale de collecte (1) des réponses ainsi mémorisées dans ledit boîtier (2), celui-ci comportant un clavier de touches de saisie (9, 11, 12), une mémoire d'enregistrement des réponses successives (41) et un dispositif de visualisation (8), ledit boîtier (2) et ladite centrale de collecte (1) comportant des moyens d'échange d'informations (28, 43) entre eux lorsque ledit boîtier (2) est disposé dans un logement (6) aménagé dans ladite centrale de collecte (1), de manière à transmettre les réponses dudit individu à ladite centrale de collecte (1) en vue d'une correction, caractérisé en ce que le boîtier (2) comprend des moyens de verrouillage du clavier (9, 11, 12) et de la mémoire d'enregistrement (41) des réponses audit questionnaire, commandés par l'enregistrement de la dernière desdites réponses dans ladite mémoire (41), des moyens de déverrouillage du clavier commandés par l'acquittement de la transmission des réponses préalablement enregistrées à ladite centrale de collecte (1), et des moyens de déverrouillage de ladite mémoire commandés par la frappe d'un code déterminé sur ledit clavier (9,11 12).

**2.** Système selon la revendication 1, caractérisé en ce que lesdits moyens d'échange d'informations (28, 43) sont constitués par un dispositif de transmission de données bidirectionnel à couplage capacitif.

**3.** Système selon la revendication 2, caractérisé en ce que le dispositif de transmission de données à couplage capacitif comporte des paires de plaques conductrices (61, 62), disposées respectivement dans la centrale de collecte (1) et dans le boîtier (2), de manière à réaliser des condensateurs permettant ladite transmission de données bidirectionnelle, entre un desdits boîtiers (2) et ladite centrale de collecte (1).

**4.** Système selon la revendication 2 ou 3, caractérisé en ce que le dispositif de transmission de données à couplage capacitif comporte des circuits d'amplification de signaux électriques (27 ; 70) disposés dans la centrale de collecte (1)

**5.** Système selon la revendication 1, caractérisé en ce que ladite centrale de collecte (1) comporte un port de transmission de données (29) pouvant être relié à un micro-ordinateur (32) de telle manière que ladite centrale travaille dans le mode esclave sous la commande dudit micro-ordinateur (32).

**6.** Système selon l'une quelconque des revendications 1 à 5, caractérisé en ce que le dispositif de visualisation (8) du boîtier est disposé dans la coque du boîtier en regard d'une fenêtre.

**7.** Système selon l'une quelconque des revendications 1 à 6, caractérisé en ce que la centrale de collecte (1) comporte un dispositif de visualisation (52) et des touches de commande (54, 59).

**9.** Système selon la revendication 7, caractérisé en ce que la centrale de collecte (2) comporte un dispositif de lecture de carte à puce (53).

**10.** Système selon la revendication 9, caractérisé en ce que le circuit électronique du boîtier comprend un système de contrôle de l'état de charge des piles (44) d'alimentation électrique qui est activé lors du contrôle du bon fonctionnement du boîtier (2), un message visuel d'alarme étant affiché sur le dispositif de visualisation dudit micro-ordinateur (32) ou sur ledit dispositif de visualisation (52) de la centrale de collecte (1) lorsque la charge des piles (44) descend au-dessous d'un seuil prédéterminé.

**11.** Procédé pour la mise en oeuvre du système selon l'une quelconque des revendications précédentes, comprenant, pour chacun desdits individus, les étapes suivantes :
- saisie de réponses audit questionnaire à l'aide dudit clavier de touches (9, 11, 12) du boîtier autonome ;
- enregistrement desdites réponses successives dans ladite mémoire (41) ;
- disposition dudit boîtier autonome (2) dans ledit logement (6) aménagé dans ladite centrale de collecte (1);
- transmission desdites réponses à ladite centrale de collecte (1) ;
caractérisé en ce qu'il comprend en outre au moins les étapes suivantes :
- verrouillage dudit clavier de touches (9, 11, 12) et de ladite mémoire (41) après la saisie de la dernière desdites réponses ;
- déverrouillage dudit clavier de touches (9, 11, 12) sur réception dudit acquittement de transmission desdites réponses vers ladite centrale de collecte (1) ;
- et déverrouillage de ladite mémoire (41) sur réception dudit code déterminé frappé sur ledit clavier de touche (9, 11, 12).

**12.** Procédé suivant la revendication 11 caractérisé en ce qu'avant ladite étape de déverrouillage de ladite mémoire d'enregistrement des réponses du boîtier (2), il comprend une étape supplémentaire optionnelle consistant en un cycle d'essai et d'apprentissage et effectuée au moyen dudit clavier de touches de saisie (9, 11, 12).

**13.** Procédé selon la revendication 11 ou 12, caractérisé en ce que ladite étape de déverrouillage dudit clavier est réalisé pendant une phase d'initialisation dudit boîtier (2) au cours de laquelle le boîtier reçoit des données caractéristiques dudit candidat et les affiche sur ledit dispositif de visualisation (8).

**14.** Procédé selon l'une quelconque des revendications 11 à 13, caractérisé en ce qu'il comprend une étape préalable de contrôle du bon fonctionnement dudit boîtier (2), effectuée avant le début de chaque examen.
